# EUROPEAN PATENT APPLICATION

(11) **EP 2 942 270 A1**
(43) Date of publication of application: **11.11.2015**
(21) Application number: 14275106.4
(22) Date of filing: 07.05.2014
(51) Int. Cl.: B64C 3/34, B64D 37/06, B64D 37/32

(54) **Liquid storage tank**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A liquid storage tank (16), for example an aircraft fuel tank, comprising: a plurality of tank walls enclosing a liquid storage space (14), the plurality of tank walls including a first tank wall (10) (e.g. an external skin of the aircraft) and a second tank (8) wall (e.g. a rib or spar of an aircraft substructure) coupled to and oblique to the first tank wall (10); and a reinforcing member (18) comprising a first portion (18a) and a second portion (18b) connected to and oblique to the first portion (18a). The first portion (18a) of the reinforcing member (18) is fixedly attached to the first tank wall (10), and the second portion (18b) of the reinforcing member (18) is fixedly attached to the second tank wall (8), thereby opposing movement of the first tank wall (10) relative to the second tank wall (8).

## Description

### FIELD OF THE INVENTION

The present invention relates to liquid storage tanks.

### BACKGROUND

A high speed projectile on impact with and penetration into a liquid containing tank generates very high pressure in the liquid. This phenomenon, known as hydrodynamic ram, typically includes the generation of shock waves and subsequent pressure pulses in the liquid. These pressures, combined with the penetration damage from the projectile, can cause damage to the tank structure and frequently are the cause of catastrophic failure of the tank. The hydrodynamic ram pressure pulses are intense but of short duration which propagate through the liquid in the tank.

There is thus a need for means for reducing hydrodynamic ram pressure in the liquid in such a tank and for a generally improved tank which has an improved ability to sustain projectile impact without catastrophic failure.

### SUMMARY OF THE INVENTION

In a first aspect, the present invention provides a liquid storage tank comprising a plurality of tank walls enclosing a liquid storage space, the plurality of tank walls including a first tank wall and a second tank wall coupled to the first tank wall and oblique to the first tank wall, and a reinforcing member comprising a first portion and a second portion connected to the first portion and oblique to the first portion. The first portion of the reinforcing member is fixedly attached to the first tank wall, and the second portion of the reinforcing member is fixedly attached to the second tank wall, thus opposing movement of the first tank wall relative to the second tank wall.

The liquid storage tank may be an aircraft fuel tank onboard an aircraft.

The first tank wall may be formed from at least part of an external skin of the aircraft.

The second tank wall may be formed from at least part of a rib or a spar of a substructure of the aircraft.

The first tank wall may be made of a carbon fibre composite material.

The second tank wall may be made of a carbon fibre composite material.

The reinforcing member may be made of metal (e.g. aluminium).

The first tank wall may be attached to the second tank wall by a first plurality of fasteners.

The first portion of the reinforcing member may be attached to the first tank wall by a second plurality of fasteners.

The second portion of the reinforcing member may be attached to the second tank wall by a third plurality of fasteners.

The first tank wall may comprise a substantially planar surface. The first portion of the reinforcing member may comprise a further substantially planar surface. The substantially planar surface of the first portion of the reinforcing member may be flush against the substantially planar surface of the first tank wall.

The second tank wall may comprise a substantially planar surface. The second portion of the reinforcing member may comprise a further substantially planar surface. The substantially planar surface of the second portion of the reinforcing member may be flush against the substantially planar surface of the second tank wall.

The second tank wall may be substantially perpendicular to the first tank wall. The first portion of the reinforcing member may be substantially perpendicular to the second portion of the reinforcing member such that the reinforcing member has a generally L-shaped cross section.

Proximate to the first tank wall, the second tank wall may have a generally L-shaped cross section. The reinforcing member may have a generally L-shaped cross section. The second tank wall and the reinforcing member may be attached together so as to provide an assembly having a generally T-shaped cross section.

In a further aspect, the present invention provides a vehicle comprising a liquid storage tank, the liquid storage tank according to the preceding aspect.

In a further aspect, the present invention provides a method of providing a liquid storage tank, the method comprising providing a plurality of tank walls such that they define a liquid storage space, providing the plurality of tank walls including providing a first tank wall, and coupling a second tank wall to the first tank wall such that the second tank wall is oblique to the first tank wall, and providing a reinforcing member, the reinforcing member comprising a first portion and a second portion connected to the first portion and oblique to the first portion, and coupling the reinforcing member to the first and second tank walls such that the first portion of the reinforcing member is fixedly attached to the first tank wall, and the second portion of the reinforcing member is fixedly attached to the second tank wall, thereby opposing movement of the first tank wall relative to the second tank wall.

The liquid storage tank may be an aircraft fuel tank onboard an aircraft.

The first tank wall may be formed from at least part of an external skin of the aircraft. The second tank wall may be formed from at least part of a rib or a spar of a substructure of the aircraft.

### BRIEF DESCRIPTION OF THE DRAWINGS

Figure 1 is a schematic illustration (not to scale) of an exploded view of an example aircraft wing in which an embodiment of a baffle is implemented;
Figure 2 is a schematic illustration (not to scale) showing a cross section through a fuel tank in the aircraft wing; and
Figure 3 is a schematic illustration (not to scale) illustrating effects of a projectile impacting with an external surface of the fuel tank.

### DETAILED DESCRIPTION

In the following description, like reference numerals refer to like elements.

The following description is based on embodiments of the invention and should not be taken as limiting the invention with regard to alternative embodiments that are not explicitly described herein. Structural material types and methods of construction provided herein are examples only.

It will be appreciated that relative terms such as top and bottom, upper and lower, and so on, are used merely for ease of reference to the Figures, and these terms are not limiting as such, and any two differing directions or positions and so on may be implemented.

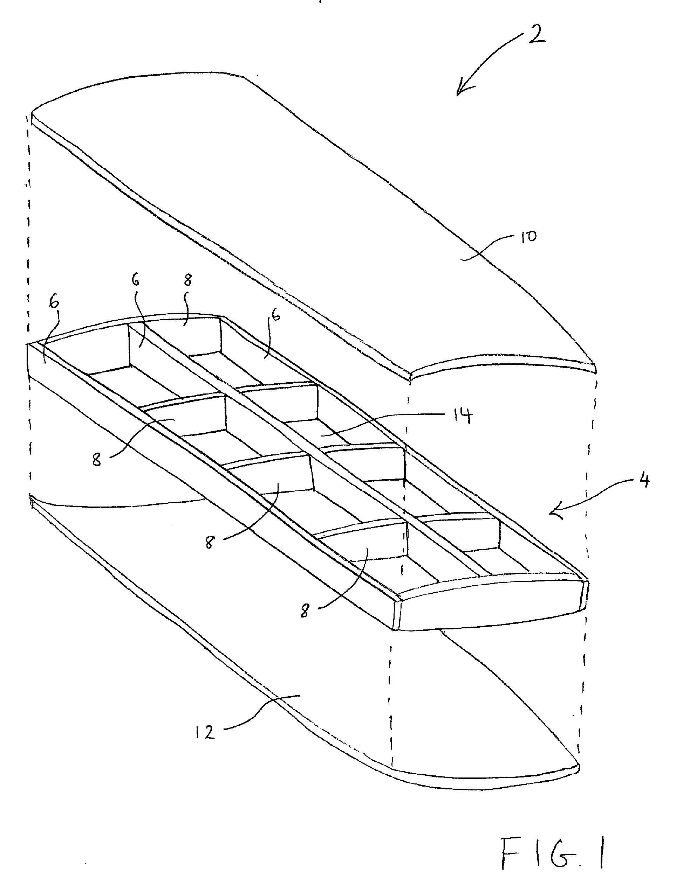

Figure 1 is a schematic illustration (not to scale) of an exploded view of an example aircraft wing 2 in which an embodiment of a hydrodynamic ram reducing baffle is implemented.

The aircraft wing 2 comprises a substructure 4 comprising a plurality of spars 6 and ribs 8. The spars 6 are spaced apart from one another and are aligned along the length of the aircraft wing 2. The spars 6 are coupled together by the spaced apart ribs 8 which are substantially perpendicular to the spars 6. The spars 6 and ribs 8 are connected together by fasteners (not shown in the Figures). The spars 6 and ribs 8 are made of carbon fibre composite (CFC) material, i.e. a composite material comprising a polymer matrix reinforced with carbon fibres. In other examples, the spars 6 and ribs 8 are made of a different appropriate material, for example, aluminium.

The aircraft wing 2 further comprises external skins, namely an upper skin 10 and a lower skin 12. The upper skin 10 comprises a plurality of panels made of CFC material. The upper skin 10 is attached to an upper surface of the substructure 4 by fasteners (not shown in the Figures). The lower skin 12 comprises a plurality of panels made of CFC material. The lower skin 12 is attached to a lower surface of the substructure 4 by fasteners (not shown in the Figures). The external skin 10, 12 may each be, for example, 8mm thick.

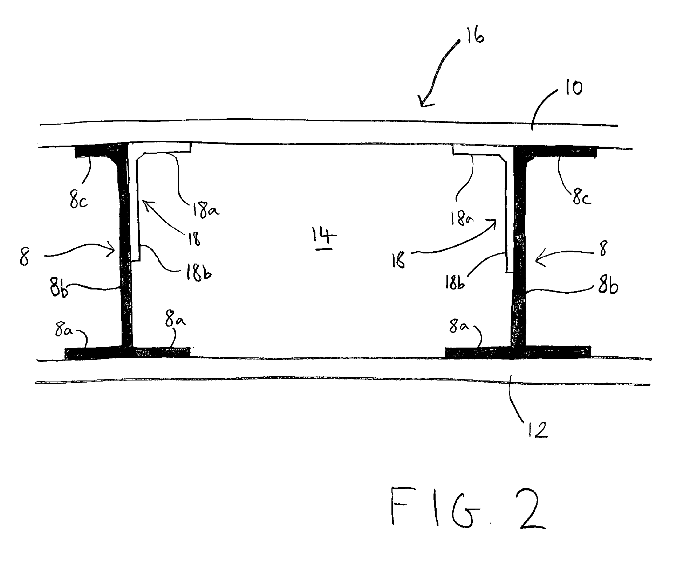

When the substructure 4 and the external skins 10, 12 are attached together (and, for example, bonded with a sealant), a cavity defined by the substructure 4 and skins 10, 12 is formed. Such a cavity is used as a fuel tank for storing aircraft fuel and is indicated in Figure 1 by the reference numeral 14. The fuel tank is described in more detail later below with reference to Figure 2.

The aircraft wing 2 further comprises a leading edge structure, a trailing edge structure and a wing tip structure, which are not shown in Figure 1 for reasons of clarity.

Figure 2 is a schematic illustration (not to scale) showing a cross section through the fuel tank 16 in the aircraft wing 2 taken parallel to the length of the aircraft wing 2 (i.e. perpendicular to a longitudinal or roll axis of an aircraft to which the wing 2 is attached).

In this embodiment, the outer walls of the fuel tank 16 are provided by spars 6, ribs 8, and the upper and lower skins 10, 12. Aircraft fuel is stored in the cavity 14 defined by the fuel tank outer walls.

As shown in Figure 2, side walls of the fuel tank 16 are provided, at least partially by ribs 8 which are indicated in the Figures by blacked-out sections. In this embodiment, when viewed from the side, as shown in Figure 2, the ribs 8 have substantially J-shaped cross-sections. In particular, in this embodiment, each rib 8 comprises:
- a planar first portion 8a that is attached (e.g. using fasteners) to and substantially parallel with the lower skin 12;
- a planar second portion 8b connected along one edge to the first portion 8a and extending substantially perpendicularly from the first portion 8a between the lower skin 12 and the upper skin 10; and
- a planar third portion 8c that is connected to the edge of the second portion 8b that is opposite to the edge of the second portion 8b that is connected to the first portion 8c, and is attached to (e.g. using fasteners) and substantially parallel with the upper skin 10.

Preferably, the first portion 8a of the rib 8 is flush against the lower skin 12.

Preferably, the third portion 8c of the rib 8 is flush against the upper skin 10.

In this embodiment, when viewed from the side as shown in Figure 2, for each rib 8, the second portion 8b of that rib 8 is connected to the first portion 8a of that rib 8 substantially equidistant between the edges of that first portion 8a. In this embodiment, the first portion 8a of the rib 8 and the second portion 8b of the rib 8 form an assembly with generally T-shaped cross section.

In this embodiment, when viewed from the side as shown in Figure 2, for each rib 8, the second portion 8b of that rib 8 is connected to the third portion 8c of that rib 8 at or proximate to one edge of that third portion 8c and such that the second portion 8b of the rib 8 and the third portion 8c of the rib 8 are substantially perpendicular. In this embodiment, the second portion 8b of the rib 8 and the third portion 8c of the rib 8 form an assembly with generally L-shaped cross section.

In this embodiment, each wall of the fuel tank 16 further comprises a reinforcing member 18. In this embodiment, when viewed from the side, as shown in Figure 2, the reinforcing members 18 have substantially L-shaped cross-sections. In particular, in this embodiment, each reinforcing member 18 comprises:
- a planar first portion 18a that is attached (e.g. using fasteners) to and substantially parallel with the upper skin 10;
- a planar second portion 18b connected along one edge to the first portion 18a and extending perpendicularly from the first portion 18a.

Preferably, the first portion 18a of the reinforcing member 18 is flush against the upper skin 10.

Preferably, the second portion 18b of the reinforcing member 18 is flush against the second portion 8b of a rib 8.

In this embodiment, when viewed from the side as shown in Figure 2, for each reinforcing member 18, the second portion 18b of that reinforcing member 18 is connected to the first portion 18a of that reinforcing member 18 at or proximate to one edge of that first portion 8a.

In this embodiment, each reinforcing member 18 is attached to a respective rib 8. In particular, the second portion 18b of a reinforcing member 18 is attached to the second portion 8b of a respective rib 8 such that the second portion 18b of the reinforcing member 18 abuts and is parallel with the second portion 8b of the rib 8, and such that the first portion 18a of the reinforcing member 18 is substantially parallel with the third portion 8c of the rib 8. Preferably, the reinforcing member 18 is attached to the upper skin 10 and the rib 8 using a plurality of fasteners as opposed to bonding, thereby reducing the likelihood of disbonding occurring under hydrodynamic loading conditions. Nevertheless, in some embodiments, the reinforcing member 18 may be attached to the upper skin 10 and/or the rib 8 by bonding.

Thus, in this embodiment, the rib 8 and the reinforcing member 18 are fixedly attached together so as to form an assembly that, when viewed from the side as shown in Figure 2, has a substantially I-shaped cross-section. When viewed from the side as shown in Figure 2, the reinforcing member 8 and the second and third portions 8b, 8c of the rib 8 form an assembly having a generally T-shaped cross-section.

Preferably, when viewed from the side as shown in Figure 2, the second portion 18b of each reinforcing member 18 extends along at least a quarter of the length of the second portion 8b of the respective rib 8 to which it is attached. More preferably, when viewed from the side as shown in Figure 2, the second portion 18b of each reinforcing member 18 extends along at least a half of the length of the second portion 8b of the respective rib 8 to which it is attached. More preferably, when viewed from the side as shown in Figure 2, the second portion 18b of each reinforcing member 18 extends along at least three-quarters of the length of the second portion 8b of the respective rib 8 to which it is attached. More preferably, when viewed from the side as shown in Figure 2, the second portion 18b of each reinforcing member 18 extends along at substantially all of the length of the second portion 8b of the respective rib 8 to which it is attached.

The reinforcing members 18 are rigid. In this embodiment, each reinforcing member 18 is a single item as opposed to being made from multiple component parts that are attached together, for example, a reinforcing member 18 may be a machined or forged item made from a single piece of material. In this embodiment, the reinforcing members 18 are made of metal such as aluminium or titanium. However, in other embodiments, one or more or the reinforcing members 18 is made of one or more different materials instead of or in addition to metal, for example CFC, an aramid or para-aramid synthetic fibre such as poly-paraphenylene terephthalamide which is more common known as Kevlar (TM), etc.

In this embodiment, as with the ribs 8, each spar 6 may also have substantially J-shaped cross-section and be attached to a respective L-shaped reinforcing member in such a way that an assembly having a substantially I-shaped cross section is produced.

As will now be described in more detail, the reinforcing members 18 are operable to reduce the likelihood of catastrophic failure of the fuel tank 16 resulting from impact of a projectile with an external surface of the fuel tank 16.

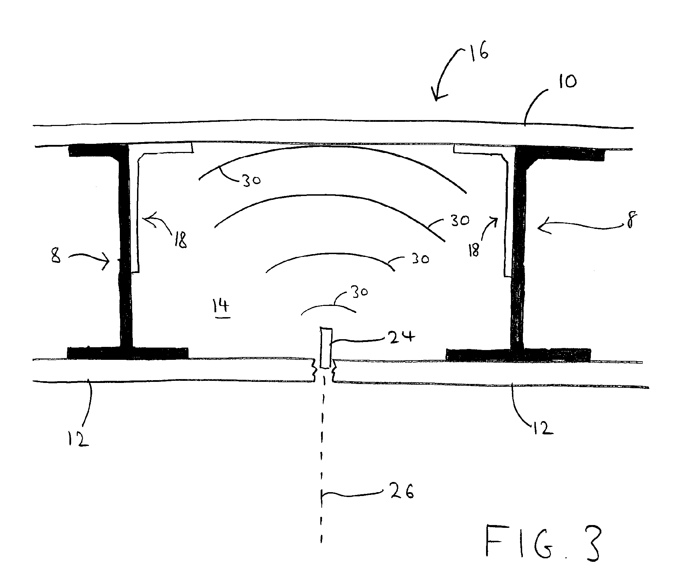

Figure 3 is a schematic illustration (not to scale) illustrating effects of a projectile 24 impacting with the lower skin 12 of the fuel tank 16. The path of the projectile 24 through the lower skin 12 is indicated in Figure 3 by the reference numeral 26.

The projectile 24 may be any appropriate projectile or foreign object such as a bullet, warhead fragment, a vehicle part, a rock, a maintenance tool, hail, ice, a bolt, etc. An example projectile has a weight of approximately 3.5g, is substantially spherical in shape having a diameter of approximately 9.5mm, and travels with a velocity of 1500m/s. A further example projectile is a 44g 12.5mm bullet that travels with a velocity of 500m/s.

In this example, the projectile 24 initially impacts with an external surface of the lower skin 12 and travels through the lower skin 12. The projectile 24 causes high strain rate shear damage to the lower skin 12 resulting in a hole in the lower skin 12 approximately the size of the projectile 24.

In this example, on piercing the lower skin 12, the projectile 24 impacts with the fluid within the cavity 14 thereby generating one or more high pressure shock waves 30 within the fluid. The shockwaves 30 travel through the fluid in the fuel tank 16 and impinge on the upper skin 10, thereby exerting an outwards force on the upper skin 10 which acts so as to cause the upper skin 10 to bow outwards. Also, in this example, as the projectile 24 passes through the fluid in the fuel tank 16, a cavitation "wake" may form behind the projectile 24, i.e. a region of low pressure (e.g. a vapour or a vacuum) may form in the wake of the projectile 24. This causes a fluid displacement and an increase in the pressure of the fluid in the fuel tank 16. This increased in pressure in the fluid may be sufficient to cause the upper skin 10 to bow outwards.

In conventional systems, this significant outward bowing of the upper skin 10 may cause significant damage to the aircraft substructure resulting in a catastrophic failure of the fuel tank 16 and loss of the aircraft. For example, the deflection of the skins 10, 12 may cause the one or both skins 10, 12 to decouple from the spars 6 and/or ribs 8. Also for example, fasteners that couple a skin 10, 12 to the spars 6 and/or the ribs 8 may be "pulled through" the spars/ribs by the deflection of a skin 10, 12. Also for example, the deflection of the upper skin 10 may cause the third portion 8c of a rib 8 to rotate relative to the second portion 8b of that rib 8 about the point at which the second and third portions 8b, 8c are connected, thereby causing significant internal delamination of the rib 8.

The reinforcing members 18 are arranged to resist outward bowing of the upper skin 10. The reinforcing members 18 provide that an increased proportion of the upper skin 10 is coupled to the ribs 8, thereby, distributing the force experienced by upper skin 10 caused by the shock waves 30 and the above described cavitation effect. The reinforcing members 18 advantageously tend to reduce or eliminate outward movement of one skin relative to the other skin. Thus, the likelihood of a skin 10, 12 becoming detached from a rib/spar tends to be reduced or eliminated. Also, the likelihood of fastener "pull through" occurring tends to be reduced or eliminated. Also, rotation of part of a rib/spar relative to another part of that rib/spar tends to be reduced or eliminated, thereby reducing the likelihood of internal delamination within that rib/spar occurring. Should delamination within the CFC rib/spar occur, the elastic deformation properties of the metallic reinforcing member tend to ensure that the skin is retained against the rib/spar.

Thus, the above described reinforcing members tend to reduce or eliminate hydrodynamic ram damage to a fuel tank caused by an object impacting with an external surface of the fuel tank. Thus, the likelihood of catastrophic failure of the fuel tank structure and corresponding aircraft loss tends to be reduced or eliminated. The reinforcing members tend to provide that the fuel tank is better able to accommodate the hydrodynamic ram pressures introduced by the impact of a projectile with the walls of the fuel tank.

Advantageously, the reinforcing members occupy a relatively low volume within the fuel tank. In particular, the reinforcing members in combination occupy less than 5% of the total internal volume (i.e. capacity) of the fuel tank 16. In other embodiments, the reinforcing members occupy a different proportion of the fuel tank capacity.

The above described reinforcing members advantageously tend to be relative easy and cheap to manufacture. Furthermore, the above described reinforcing members may be produced using conventional production apparatus and methods.

The above described reinforcing members tend to provide protection against hydrodynamic ram damage whilst occupying a relatively small amount of the fuel tank's capacity.

The above described reinforcing members tend to be relatively lightweight so as not to be a significant burden to the aircraft.

The above described reinforcing members tend to be relatively easy to retrofit to existing aircraft fuel tanks. Retrofitting the above described reinforcing members to existing aircraft without replacing the J-shaped cross-section ribs and/or spars of those aircraft tends to be possible.

Such retrofitting may be performed, for example, as follows. Firstly, a reinforcing member 18 is attached to (e.g. using fasteners) a part of a rib 8 that is to form a wall of the fuel tank 16. This is performed by attaching the second portion 18b of the reinforcing member 18 to the second portion 8b of that rib 8 such that the second portion 18b of the reinforcing member 18 is in contact with and is parallel to the second portion 8b of the rib 8, and such that the first portion 18a of the reinforcing member 18 is substantially parallel with, and flush with, the third portion 8c of the rib 8. Secondly, the upper skin 10 is attached to (e.g. using fasteners) the first portion 18a of the reinforcing member 18 and the third portion 8c of the rib 8. Thus, the fuel tank 16 of Figure 2 is provided.

Use of the above described reinforcing members having L-shaped cross-sections to create fuel tank walls having I-shaped cross sections tends to be advantageous compared to, for example, replacing ribs/spars having J-shaped cross-sections with ribs/spars having I-shaped cross sections. This is because manufacturing of ribs/spars having I-shaped cross sections would be costly and may require new production processes and tooling. Also, a CFC-only rib/spar having an I-shaped cross section tends to be relatively susceptible to internal delamination, whereas the combined CFC and metal assembly provided by a CFC rib/spar having a J-shaped cross-section and a metallic reinforcing member having an L-shaped cross-section tends to be less susceptible to such internal delamination. Also, retrofitting ribs/spars having I-shaped cross sections to an existing aircraft tends to be difficult and costly compared to the retrofitting of the above described reinforcing members. Also, it is possible to only install reinforcing members at locations along a rib/spar that correspond to the fuel tank walls, thereby limiting any increase in the mass of the aircraft. This tends to be in contrast to if ribs/spars having I-shaped cross sections were used which would have I-shaped cross sections along their entire length (i.e. including regions that do not form the walls of the fuel tank).

In the above embodiments, the reinforcing members are implemented in an aircraft wing fuel tank. However, in other embodiments, the reinforcing members are used in a different type of container for containing fluid. In some embodiment, one or more walls of the container may be made of a different material to that described above.

In the above embodiments, the reinforcing members couple together the upper skin and the ribs. However, in other embodiments, the reinforcing members couple together two different walls of the fuel tank instead of or in addition to the upper skin and the ribs.

In the above embodiments, the reinforcing members are wholly located within the cavity (i.e. the liquid storage space) of the fuel tank. However, in other embodiments, one or more of the reinforcing members is located at least partially outside the liquid storage space) of the fuel tank.

Any appropriate number of reinforcing members may be used. An "optimum" number of reinforcing members may be determined, for example, via experimentation.

## Claims

1. A liquid storage tank (16) comprising:
a plurality of tank walls enclosing a liquid storage space (14), the plurality of tank walls including:
a first tank wall (10); and
a second tank (8) wall coupled to the first tank wall (10) and oblique to the first tank wall (10); and
a reinforcing member (18) comprising:
a first portion (18a); and
a second portion (18b) connected to the first portion (18a) and oblique to the first portion (18a); wherein
the first portion (18a) of the reinforcing member (18) is fixedly attached to the first tank wall (10), and the second portion (18b) of the reinforcing member (18) is fixedly attached to the second tank wall (8), thereby opposing movement of the first tank wall (10) relative to the second tank wall (8).

2. A liquid storage tank (16) according to claim 1, wherein the liquid storage tank (16) is an aircraft fuel tank onboard an aircraft.

3. A liquid storage tank (16) according to claim 2, wherein:
the first tank wall (10) is formed from at least part of an external skin of the aircraft; and
the second tank wall (8) is formed from at least part of a rib or a spar of a substructure of the aircraft.

4. A liquid storage tank (16) according to any of claims 1 to 3, wherein the first tank wall (10) is made of a carbon fibre composite material.

5. A liquid storage tank (16) according to any of claims 1 to 4, wherein the second tank wall (8) is made of a carbon fibre composite material.

6. A liquid storage tank (16) according to any of claims 1 to 5, wherein the reinforcing member (18) is made of metal.

7. A liquid storage tank (16) according to claim any of claims 1 to 6, wherein:
the first tank wall (10) is attached to the second tank wall (8) by a first plurality of fasteners;
the first portion (18a) of the reinforcing member (18) is attached to the first tank wall (10) by a second plurality of fasteners; and
the second portion (18b) of the reinforcing member (18) is attached to the second tank wall (8) by a third plurality of fasteners.

8. A liquid storage tank (16) according to claim any of claims 1 to 7, wherein:
the first tank wall (10) comprises a substantially planar surface;
the first portion (18a) of the reinforcing member (18) comprises a further substantially planar surface; and
the substantially planar surface of the first portion (18a) of the reinforcing member (18) is flush against, and coupled to, the substantially planar surface of the first tank wall (10).

9. A liquid storage tank (16) according to claim any of claims 1 to 8, wherein:
the second tank wall (8) comprises a substantially planar surface;
the second portion (18b) of the reinforcing member (18) comprises a further substantially planar surface; and
the substantially planar surface of second portion (18b) of the reinforcing member (18) is flush against, and coupled to, the substantially planar surface of the second tank wall (8).

10. A liquid storage tank (16) according to claim any of claims 1 to 9, wherein:
the second tank wall (8) is substantially perpendicular to the first tank wall (10); and
the first portion (18a) of the reinforcing member (18) is substantially perpendicular to the second portion (18b) of the reinforcing member (18) such that the reinforcing member (18) has a generally L-shaped cross section.

11. A liquid storage tank (16) according to claim any of claims 1 to 10, wherein:
proximate to the first tank wall (10), the second tank wall (8) has a generally L-shaped cross section;
the reinforcing member (18) has a generally L-shaped cross section; and
the second tank wall (8) and the reinforcing member (18) are attached together so as to provide an assembly having a generally T-shaped cross section.

12. A vehicle comprising a liquid storage tank (16), the liquid storage tank (16) according to any of claims 1 to 11.

13. A method of providing a liquid storage tank (16), the method comprising:
providing a plurality of tank walls such that they define a liquid storage space (14), providing the plurality of tank walls including:
providing a first tank wall (10); and
coupling a second tank wall (8) to the first tank wall (10) such that the second tank wall (8) is oblique to the first tank wall (10); and
providing a reinforcing member (18), the reinforcing member (18) comprising:
a first portion (18a); and
a second portion (18b) connected to the first portion (18a) and oblique to the first portion (18a); and
coupling the reinforcing member (18) to the first and second tank walls (10, 8) such that the first portion (18a) of the reinforcing member (18) is fixedly attached to the first tank wall (10), and the second portion (18b) of the reinforcing member (18) is fixedly attached to the second tank wall (8), thereby opposing movement of the first tank wall (10) relative to the second tank wall (8).

14. A method according to claim 13, wherein the liquid storage tank (16) is an aircraft fuel tank onboard an aircraft.

15. A method according to claim 14, wherein:
the first tank wall (10) is formed from at least part of an external skin of the aircraft; and
the second tank wall (8) is formed from at least part of a rib or a spar of a substructure of the aircraft.
